# EUROPEAN PATENT SPECIFICATION

(11) **EP 1 452 717 B1**
(45) Date of publication and mention of the grant of the patent: **28.03.2007**
(21) Application number: 01274709.3
(22) Date of filing: 16.11.2001
(51) Int. Cl.: F02M 21/02, F02M 51/08, F02M 51/06, F02M 61/04, F02M 61/12, F02M 61/16, C23C 8/38

(54) **FUEL INJECTION VALVE**
KRAFTSTOFFEINSPRITZVENTIL
SOUPAPE D'INJECTION DE CARBURANT

(43) Date of publication of application: 01.09.2004
(73) Proprietor: Hitachi, Ltd., Tokyo 100-8280 (JP); Hitachi Car Engineering Co., Ltd., Hitachinaka-shi, Ibaraki 312-0062 (JP)
(72) Inventor: SHIMIZU, Syuichi, c/o Hitachi Car Eng. Co. Ltd., Ibaraki 312-0062 (JP); KAGIYAMA, Arata, c/o Hitachi, Ltd., Automotive, Ibaraki 312-0062 (JP); GUNJI, Kenichi, Hitachi Car Engineering Co., Ltd., Ibaraki 312-0062 (JP)
(74) Representative: Beetz & Partner
(86) International application number: PCT/JP2001/010056
(87) International publication number: WO 2003/042526

(56) References cited:
- EP-A- 0 345 771
- WO-A1-01/11225
- WO-A1-96/00313
- JP-A- 7 054 732
- JP-A- 7 197 352
- JP-A- 10 121 195
- US-A- 5 346 137
- US-A- 5 514 064
- US-A- 6 117 280

## Description

### FIELD OF THE INVENTION

The present invention relates to an electromagnetically driven type fuel injection valve used for internal combustion engine.

### BACKGROUND OF THE INVENTION

An electromagnetic type fuel injection valve driven by electric signals from an engine control unit has been widely known in the field of internal combustion engines of automobiles.

In the electromagnetic fuel injection valve, at the time of opening and closing of the valve, impacts arise between a valve body and a valve seat, and between a stopper for regulating the valve stroke and a movable element equipped with the aforementioned valve body. A valve guide guides the sliding of the movable element.

When the fuel injection valve having such impact parts and sliding parts is used for a gasoline engine or diesel engine, liquid membranes are formed on the surfaces of the impact parts and sliding parts since the fuel is a liquid. Since the liquid membranes have functions of impact absorption and lubrication, they make possible to reduce the frictional wear and deformation of the parts of the injection valve.

In prior arts, the Japanese Application Patent Laid-open Publication No. Hei 08(1996)-506877 describes the following electromagnetically driven fuel injection valve. That is, the surfaces of the parts subject to wear and the surfaces of the parts subject to impact in movable elements and nozzle body etc. are provided with wear-proof coating of chromium, molybdenum and nickel, or are nitrided by plasma nitriding method or gas nitriding method, thereby hardening those surfaces.

When the fuel injection valve uses a natural gas (hereinafter referred to as "CNG" as an abbreviation for compressed natural gas) as fuel, the aforementioned liquid membrane cannot be formed on the impact parts or sliding parts, since the fuel is gaseous. Therefore, in case of using the CNG type injection valve, it is required taking measures for greater impact-proof and wear -proof than as usual.

WO 01/11225 A1 discloses a fuel injection valve exhibiting an improved wear resistance due to a surface-reformed layer formed on inner circumferential surface of the stator core, for example. The surface-reformed layer may include a nitriding layer and a composite layer of a nitriding layer and a hard film.

In view of the prior art described above, the present invention is proposed. The object of the present invention is to provide a fuel injection valve that can improve impact-proof and wear-proof of the component parts of the fuel injection valve for an internal combustion engine using a gasified fuel such as CNG.

### DISCLOSURE OF INVENTION

The present invention has been created based on the understanding that the conventional liquid fuel type injection system is not sufficient to meet the requirements of CNG type fuel injection valves. It proposes a fuel injection valve having the features of claim 1. According to the invention, a wear-proof coating (or lamella) is provided on the surface of the guide sleeve and on the surface of the guide which are both formed by a non-magnetic member.
Widely known normal nitriding is carried out at a temperature of 500 through 550°C. In this temperature range, when the impact parts and sliding parts of the injection valve are made of such a chromium-containing impact proof material as martensitic stainless steel, much chromium nitride (CrN) is precipitated. If much chromium is precipitated as nitride from a base material, the corrosion resistance (oxidation resistance) of the base material will be reduced. In the present embodiment, the nitriding lamella is formed at a low temperature range from 350 through 480°C to inhibit generation of a chromium nitride. This structure provides an excellent fuel injection valve having the impact-proof parts and wear-proof parts which are hard to cause pitting corrosion.
(2) As the optimum example, the aforementioned nitriding lamella has a depth of 30 µm or more from the surface, and the hardness is kept at not less than HV 800 even at a depth of 30 µm.
(3) In a injection valve in which the sliding motion of a movable element is guided by the inner circumferential surface of one end of the stationary hollow core (which is a member magnetically attracting the movable element having a valve body), the stationary core is also a component part of a magnetic circuit. If the stationary core which is one of sliding parts is provided with nitriding, the magnetic characteristics are deteriorated. To prevent this, the following measures are proposed.
   That is, the inner circumferential surface of the stationary core constituting part of the magnetic circuit is provided with a guide sleeve for guiding the sliding motion of the movable element with a valve body. Further the guide sleeve is made of a nonmagnetic member of high hardness with a wear-proof coating. In this proposal, the movable element guided by the aforementioned guide sleeve is also provided with a guide element on the movable side. Since the guide element is also made of a nonmagnetic member of high hardness with wear-proof coating, it becomes possible to provide a more excellent fuel injection valve.
(4) Further, in case of a fuel injection valve in which the valve guide (annular member) with nitriding treatment is incorporated within the nozzle body, the following means are proposed for attaching this valve guide.

That is, the nitrided valve guide and a guide holder made of non-nitrided metallic material are arranged in layers on the receiving surface inside the nozzle body (where the guide holder is placed on top of the valve guide). Plastic deformation is applied to the outer edge of the guide holder by pressure from above in the nozzle body, whereby the guide holder is fixed onto the inner circumferential surface of the nozzle body by pressure bonding (joining method which firmly fixes something to the other thing with pressure and plastic deformation). Thus, the valve guide is fixed in that place by this guide holder.

These details are explained by the form of the below-mentioned embodiment

### BRIEF DESCRIPTION OF THE DRAWINGS

Fig. 1 is a vertical cross section of a fuel injection valve as an embodiment of the present invention;
Fig. 2 is a view of the configuration of an engine system using the aforementioned fuel injection valve;
Fig. 3 is a perspective representing the analyzed component parts;
Fig. 4 (a) shows a plan of the upper surface of the valve guide 17;
Fig. 4 (b) is a vertical cross section taken on a line corresponding to A-O-A' of Fig. 4 (a);
Fig. 5 (a) shows a plan of the upper surface of the guide holder 18;
Fig. 5 (b) is a vertical cross sectional view taken on a line corresponding to A-O-A' of Fig. 5 (a);

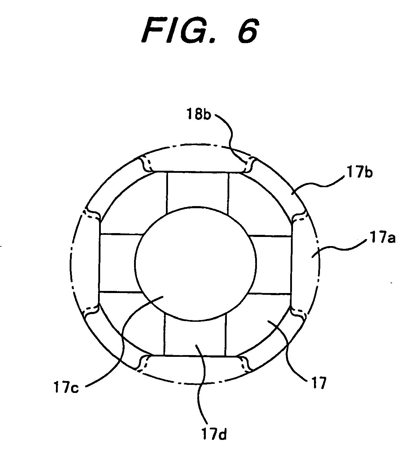

Fig. 6 is a plan of the lower surface of the aforementioned guide holder 18, which is placed on top of on the aforementioned valve guide 17 and fixed by pressure bonding; and
Fig. 7 is an explanatory diagram representing the relationship between the depth of the occurrence of the maximum stress and Vickers hardness when impact load is applied to the valve seat and valve body, as well as the relationship between the impact load and depth of the occurrence of the maximum stress.

### BEST FORM OF EMBODIMENT OF THE PRESENT INVENTION

The embodiment of the present invention is described with reference to drawings as follows.

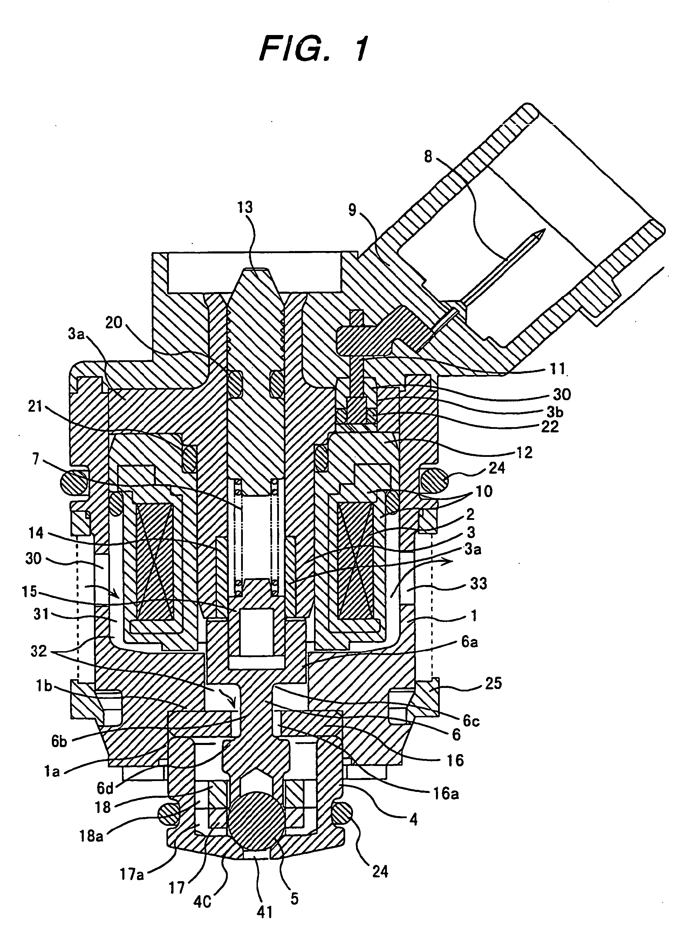

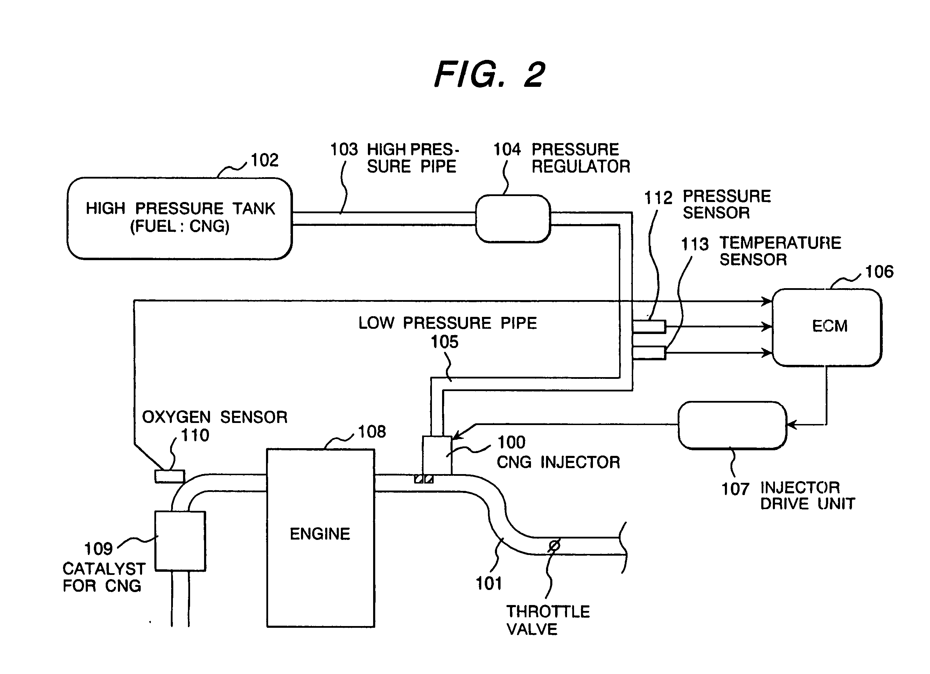

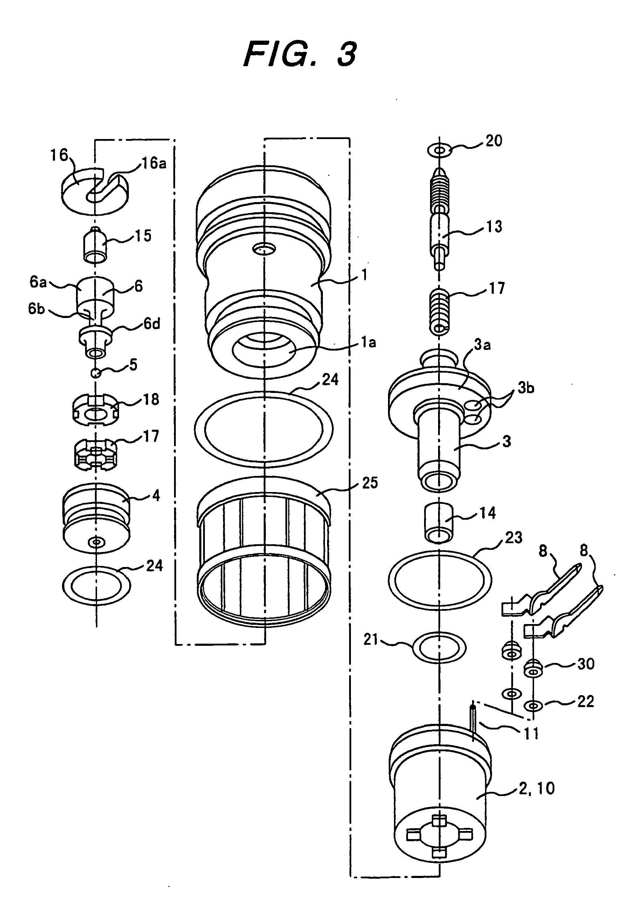

Fig. 1 is a vertical cross sectional view of a fuel injection valve as the embodiment of the present invention. Fig. 2 is a view of the configuration of an engine system using the aforementioned fuel injection valve. Fig. 3 is a perspective representing the analyzed component parts.

In the fuel injection valve of the embodiment, a CNG injector is illustrated as the best embodiment. Referring to Fig. 2, the configuration of the engine system for CNG is explained.

As shown in Fig. 2, the fuel injection valve 100 for CNG is provided at an intake pipe 101. CNG is stored in a tank 102 under a high pressure. The pressure of the CNG flowing through a high-pressure pipe 103 is regulated (reduced) by a pressure regulator 104 and the CNG is supplied to an injector 100 through a low-pressure pipe 105.

The injector 100 is controlled the opening and closing of its valve through a drive unit 107 by electrical signals from an EMC 106 (engine control module; engine control unit). The EMC 106 detects the engine operation state according to the signals from a temperature sensor of engine cooling water (not illustrated), an intake pipe pressure sensor 112 and an oxygen sensor arranged on an air flow meter or an exhaust pipe etc.. The opening time of the CNG injection valve is decided based on these detection signals. Numeral 109 denotes a catalyst for CNG.

The low-pressure pipe 105 is provided with a pressure sensor 112 and an intake air temperature sensor 113. The ECM 106 takes these signals in, and calculates and controls the valve opening time of the fuel injection valve 100 in response to the engine operation state.

In Fig. 1, the fuel injection valve comprises a casing (yoke) 1, an electromagnetic coil 2, a stationary core 3, a nozzle 4, a movable element 6 (plunger) with a valve body 5, a return spring 7, and a plastic mold 9 with connector pins 8.

The aforementioned stationary core 3 and electromagnetic coil 2 are arranged inside the casing (the body of an injection valve), and the terminals 11 of the electromagnetic coil 2 are electrically connected with the connector pins 8. The electromagnetic coil 2 wound on the bobbin 10 is covered with an external plastic mold 12.

The stationary core 3 has a hollow cylindrical form, and a flange 3a for covering the upper surface of the external plastic mold of the electromagnetic coil 2 is provided at the outer periphery. The terminals 11 are connected via terminal through holes 3b provided at the flange 3a.

An adjust screw 13 for adjusting the weight of the return spring 7 is provided inside of the top of the stationary core 3.

An annular concave 3a with the inner diameter portion partially increased is formed on the inner circumferential surface of one end (bottom end) of the stationary core 3. A nonmagnetic sleeve-shaped guide (hereinafter referred to as "guide sleeve") 14 for guiding the movement of the movable element 6 is counterlocked into the concave 3a by press fitting or bonding with pressure and plastic deformation (the so called pressure bonding). By this structure, the guide sleeve 14 can be inserted and fixed on the inner circumferential surface of the stationary core 3.

The guide sleeve 14 is made of a nonmagnetic material having a high hardness of Hv 350 or more. JIS SUS 303 or SUS 304 is used as the material, and its surface is provided with wear-proof coating, e.g., NiP plating.

In the components constituting the magnetic circuit, the casing 1 and stationary core 3 are made up of 13Cr based magnetic stainless steel, and the movable element 6 is made of a martensitic stainless steel material such as JIS SUS420J.

The movable element 6 is connected integrally with the valve body 5 (ball). The valve body 5 is made of JIS SUS 440C. The movable element 6 is comprised of a valve rod 6b and a hollow cylindrical anchor 6a (also called as a movable core or a plunger) configured integrally. The anchor has a larger diameter than the valve rod 6b and its top portion opened.

A cylindrical guide 15 on the movable element side is fixed inside of the anchor 6a through the open of top portion of the anchor 6a by press fitting or bonding with plastic deformation. The guide 15 is partly protruded from the anchor 6a. The protrusion of the guide 15 is inserted into the guide sleeve 14 so that sliding of the outer periphery of the protrusion is guided along the inner periphery of the guide sleeve 14.

The guide 15 is made of a nonmagnetic member of high hardness to ensure wear resistance, similarly to the guide sleeve 14, and is provided with hard coating such as Ni-P plating.

WCC coating, titanium coating or chromium-nitrogen coating may be used for the coating of the guide sleeve 14 and guide 15.

Further, a curve surface with radius (radius curve profile) 6c of 8 mm or more is formed on the boundary (boundary edge) of the outer periphery between the rod 6b and anchor 6a constituting the movable element 6. The size of this radius 6c is more than twice as large as that of the conventional gasoline type because of the following reason.

As described above, in the CNG fuel injection valve, the liquid membrane is not formed on the surface of the impact parts. Hence it causes a big impact as a result of the impact between the movable element and valve seat at the time of the valve opening-closing motion. If the radius is small, concentrated stress will occur on the boundary edge due to the impact at the time of the valve opening-closing motion, so sufficient durability cannot necessarily be ensured. To be more specific, the inventors of the present invention has found out through durability test that, in order to distribute the stress due to impact for ensuring durability, the aforementioned boundary edge 6c should preferably have a radius of 8 mm or more, more preferably a radius of approximately 10 mm. This consideration is incorporated in the present embodiment. Incidentally, the movable element 6 of the present embodiment has an overall length of the movable element 6 of about 17 mm, an outer diameter of the anchor 6a of about 6.6 mm, a length of the anchor 6a of 4.65 mm, an outer diameter of the valve rod 6b of about 2.3 mm and an outer diameter of the valve body 5 of about 4.0 mm.

In the anchor 6a, the side feed method instead of the top feed method is used as a fuel feed method. In the case of the side feed method, the fuel flows so as to cross the passage (between the casing 1 and magnetic coil external mold 10) inside the injection valve body through the inlet 30 and outlet 33 arranged on the body side surface of the fuel injection valve (side of the casing 1). Part of the fuel goes to an injection hole 41 through the passage 32 around the movable element when the valve opens. Thus, a fuel passage hole (orifice) need not be provided at the anchor, as in the case of top feed method (where fuel passes through into the stationary core of the fuel injection valve from above). Thereby, the situation where concentrated stress at the time of impact between the valve body and valve seat is given to the orifice of the anchor does not occur. Accordingly, the structure is suitable for CNG injector.

Further, in addition to using the aforementioned radius value and side feed type, the material of the movable element 6 itself is improved in order to enhance resistance to wear and impact; for example, nitriding is provided subsequent to quenching, whereby hardiness is upgraded. Further, to remove the stress in quenching, burnishing is carried out to the movable element. The nozzle body 4, stopper 16 and valve guide 17, in addition to the movable element 6, are provided with quenching, nitriding and burnishing, using martensitic stainless steel (e.g. JIS SUS 420J). Nitriding is applied also to the valve body 5.

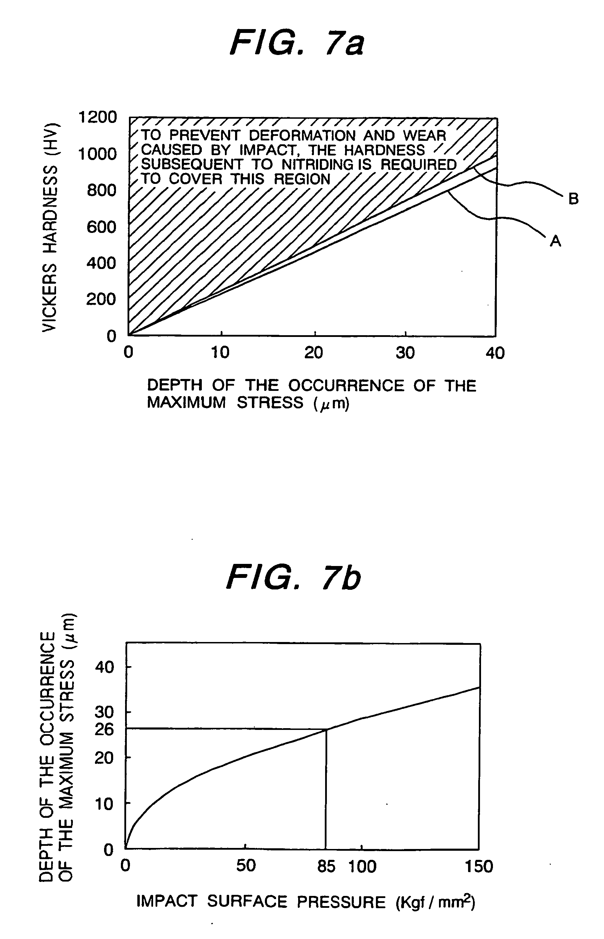

In the case of a CNG injector, the impact load given to the movable element and valve seat at the time of valve opening and closing is 85 kg/cm², for example. According to the result of the experiment, the depth of the occurrence of the maximum stress at this time is 26 µm, as shown in Fig. 7 (b). The critical Vickers hardness is Hv 670 µm, as shown by the solid line in Fig. 7 (a). The solid line A is a graph, obtained from raw data, representing the relationship between the depth of the occurrence of the maximum stress and critical Vickers hardness. In the present invention, the depth of the occurrence of the maximum stress is set at 30 µm as a result of considering a margin of safety based on the aforementioned experiment data. The Vickers hardness is 670 x 1.15=800, obtained by multiplying a safety factor of 1.15 at the depth of 30 µm. The graph in this case is represented by a solid line B in Fig. 7 (a). In the present embodiment, to overcome the impact given to the movable element and valve seat, it is preferred that the hardness of the impact parts is HV 800 or more at a depth of 50 µm from the top surface, with a margin of safety taken into account. Based on this finding, the movable element 6, nozzle body 4, stopper 16 and valve guide 17 are provided with nitriding in such a way that the aforementioned hardness conditions are met. The hardness on the top surface is about HV 1200, for example.

Each nitriding lamellas formed on the surfaces of the movable element 6, valve body 5, nozzle body 4, stopper 16 and valve guide 17 are provided by low-temperature nitriding at a temperature of 350 through 480°C. This is because of the following reasons. As described above, if the normal nitriding temperature of 500 through 550°C is adopted in the case of a chromium-containing impact-proof material such as martensitic stainless steel, much chromium is precipitated as a nitride from the base material. As a result, the impact resistance (oxidation resistance) of the base material is reduced. In the present embodiment, the nitriding lamella is produced by nitriding treatment at a low temperature of 350 through 480°C to reduce generation of the nitride product by chromium. Thereby, this structure provides an excellent fuel injection valve having the impact-proof parts and wear-proof parts which are hard to cause pitting corrosion of the base material.

For example, plasma nitriding by direct current glow discharge is used for the nitriding treatment.

The nozzle body 4 and stopper 16 are attached in the installation hole 1a of the nozzle body 4 provided at the center bottom end of the casing 1. This installation hole 1a has a step-shaped surface 1b as a receiving surface of a stopper. The stopper 16 sandwiched between the step-shaped surface 1b and the nozzle body 4. Part of the nozzle body is protruded from the installation hole 1a and pressure is given to the edge of the installation hole 1a, whereby the casing 1 and nozzle body 4 are joined with pressure-bonding.

A valve seat 4c is formed on the inner bottom of the nozzle body 4, and the fuel injection hole 41 (orifice) is made downstream of the valve seat 4c.

The nozzle body 4 incorporates a valve guide 17 and a guide holder 18 for holding the valve guide in two layers. The valve guide 17 and guide holder 18 are formed in the shape of an annular-chip. Fuel passages 17a and 18a are provided on the outer periphery of the valve guide 17 and guide holder 18.

The valve guide 17 is made of martensitic stainless steel of JIS SUS 420J etc.. Similarly to the movable element, it is treated with quenching, nitriding and burnishing in order to increase initial hardness. The guide holder 8 is made of a sintered metal, which is not provided with nitriding.

Conventionally, the edge of outer periphery of the valve guide 17 was locally pressed, whereby the valve guide 17 was pressure-bonded to the inner periphery of the nozzle body 4 by plastic deformation. However, in case of giving nitriding treatment to the valve guide 17, the hardness increases, with the result that pressure bonding with plastic deformation is difficult.

To solve this problem, in the present embodiment, a guide holder 18 not provided with nitriding is placed on top of the valve guide 17, and the edge of outer periphery of the guide holder 18 is locally pressed so as to cause plastic deformation, whereby the guide holder 18 is pressure-bonded onto the inner periphery of the nozzle body 4. In this manner, the valve guide 17 is held therein by pressure from the guide holder 18.

In the present embodiment, the following steps are taken in order to hold the valve guide 17 with greater reliability:

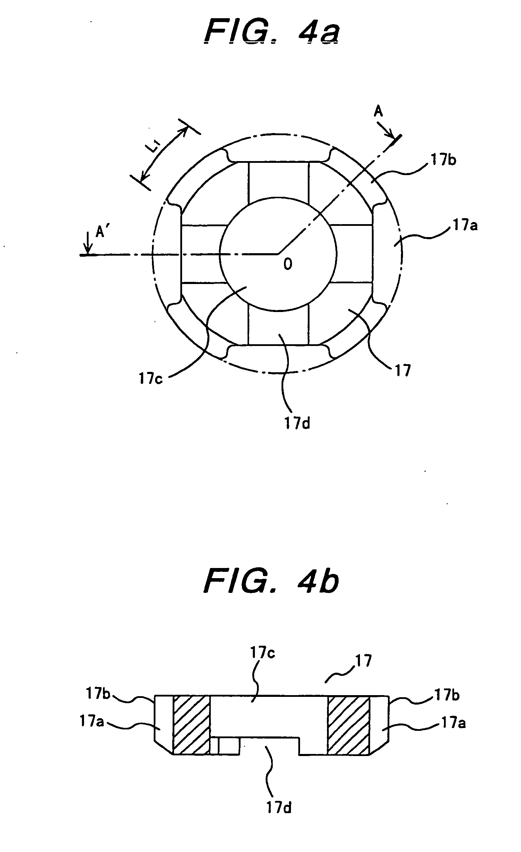

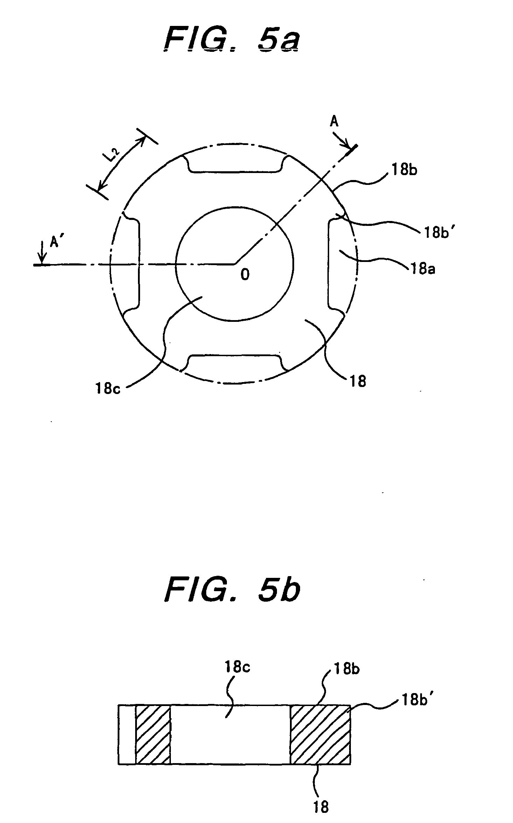

Fig. 4 (a) shows the top surface view of the valve guide 17. Fig. 4 (b) is a vertical cross sectional view taken on a line corresponding to A-O-A' of Fig. 4 (a). Fig. 5 (a) shows the top surface view of the guide holder 18. Fig. 5 (b) is a vertical cross sectional view taken on a line corresponding to A-O-A' of Fig. 5 (a).

As shown in these figures, the valve guide 17 and the guide holder 18 are respectively provided with a plurality of protrusions 17b and 18b (four protrusions in the present embodiment) each protruding in the direction of outer diameter, and these protrusions are arranged at even intervals. The grooves 17a and 18a between these protrusions form part of the fuel passage.

Among the protrusions 17b and 18b, each protrusion 18b of the guide holder 18 has the length in the circumferential direction longer than each protrusion 17b of the valve guide 17 (L₂ > L₁). In the state where the guide holder 18 and the valve guide 17 are placed in layers, the both sides of the protrusion 18b of the guide holder 18 in the circumferential direction (illustrated by a broken line) protrude more than the both sides of the protrusion 17b of the valve guide 17, as shown in Fig. 5. Each Plastic deformation by the aforementioned pressure ranges over the both sides of the protrusion 18b of the guide holder 18, so the plastic deformation reaches both sides of the protrusion 17b of the valve guide 17 in the circumferential direction.

Thereby, the valve guide 17 is also held by the guide holder 18 in the circumferential direction, hence the valve guide 17 is prevented from moving in the circumferential direction.

The movable element 6 is provided with a shoulder 6d (stopper on the movable side) that is caught with the stopper 16 when the movable element is moved by electromagnetic attraction (when the valve opens).

The valve body 5 provided at the movable element 6 is guided to the valve seat 4c through the valve guide 17.

In the stationary core 3, a return spring 7 is located between the guide element 15 on the movable element 6 side and the adjust screw 13. The movable element 6 and the valve body 5 are given the force of the return spring 7 toward the valve seat 4c. When electric power is not supplied, the valve body 5 is pressed by the valve seat 4c, and the valve is kept closed.

When electric power is supplied the electromagnetic coil 2, an electromagnetic circuit is formed on the stationary core 3, casing 1 and movable element 6, and the movable element 6 is moved by overcoming the force of the return spring 7. Then the fuel with pressure is fed in the arrow-marked direction through the fuel passage, and is injected from the injection hole 41.

Assuming that the total cross sectional area of the fuel passages formed on the valve guide 17 is S1; annual area between the valve body 5 and valve seat 4c at the time of the valve opening is S2; and the sectional area of the orifice 41 is S3, they have the relation of S1 > S2 ≥ S3.

In the aforementioned arrangement, at the time of the motion of the valve opening-closing, impact occurs between the valve body 5 and valve seat 4c. Further the relative sliding occurs between the valve guide 17 and the valve body 5 and between the movable guide element 15 and the guide sleeve 14.

Referring to Fig. 3, the following describes assembling of the fuel injection valve 100.

The movable element 6, the movable guide 15 and the valve body 5 are integrally assembled in advance, and the guide sleeve 14 is press-fitted on the inner periphery of the stationary core 3. The valve guide 17 and the guide holder 18 are provided into the nozzle body 4. Part of the movable element 6, together with the valve body 5, is inserted into the nozzle body 4, and is set in position. After putting the valve rod 6b of the movable element 6 in the groove 16a of the stopper 16, the nozzle body 4 together with the stopper 16 and movable element 6 is provided with the installation hole 1a located on the bottom end of the casing 1. And the edge of the installation hole 1a is locally deformed by pressure, whereby the casing 1 and nozzle body 4 are bonded together with pressure and plastic deformation. Then the seal ring 24 is mounted in the groove on the outer periphery of the nozzle body 4.

Inside the casing 1, the electromagnetic coil 2 covered with plastic mold 10, the stationary core 3, the spring 7 and the adjust screw 13 are mounted together with seal rings 20, 21, 22 and 23. The terminals 11 of the electromagnetic coil are drawn into the through-holes 3b arranged at the flange of the stationary core 3 through the O-ring 22 and plug 30. After the connector pin 8 has been connected to the terminal 11, the connector mold 9 is formed.

After the aforementioned assembling step, the seal ring 24 and filter 25 are mounted on the outer periphery of the casing 1. The following effects can be obtained according to the present embodiment:
(1) Wear and impact resistance of the CNG-type injector is improved.
(2) The nozzle body 4 with valve seat 4c, the valve guide 17, the valve body 5, the movable element 6 and the stopper 16 are provided with nitriding to ensure that the hardness at a depth of 30 µm from the surface is HV 800 or more, whereby wear or damage of the sliding portions and impact parts can be effectively avoided even in the case of a CNG-type injector. It should be noted that wear of these sliding parts will cause a change in flow rate characteristics as a result of a change in the relation of S1 > S2 ≥ S3. Thus, prevention of wear ensures high flow rate precision.
(3) Although the valve guide 17 is provided with nitriding, the valve guide 17 can be fixed in the position by pressure bonding of the guide holder 18 placed thereon. In the present embodiment, part of the plastic deformed portion of the guide holder 18 ranges over to the guide holder 18, thereby preventing from the movement of the valve guide 17 in the circumferential direction securely.
(4) The stationary core 3 and the movable element 6 are provided respectively with the nonmagnetic guide sleeve 14 and movable guide 15 which have high hardness with wear-proof coating (e.g. Ni-P plating). This arrangement prevents wear of the sliding surface and ensures stable guide. At the same time, it eliminates the need of nitriding the stationary core 3, thereby preventing the magnetic characteristics of the magnetic circuit from being deteriorated.
(5) The movable element 6 is not provided with an orifice for fuel flow, and the radius on the boundary between the anchor 6a and rod b is 8 mm or more (twice the conventional figure). This arrangement ensures a sufficient strength even in the case of the movable element where a heavy impact load occurs as the CNG-type injector.

The following describes the dependent embodiments of the present invention.

The valve guide and the guide holder are provided with a plurality of protrusions protruding in the direction of outer diameter, and these protrusions are arranged at even intervals. The groove between these protrusions serves as part of the fuel passage. Among these protrusions, each protrusion of the guide holder has the length in the circumferential direction longer than each protrusion of the valve guide. In the state where the guide holder and the valve guide are placed in layers, the both sides of the protrusion of the guide holder in the circumferential direction protrude more than the both sides of the protrusion of the valve guide. Each Plastic deformation by the aforementioned pressure ranges over the both sides of the protrusion of the guide holder, so the plastic deformation reaches both sides of the protrusion of the valve guide in the circumferential direction.

A fuel injection valve for internal combustion engine comprises a magnet; a movable element with the valve body opened or closed by this magnet; and a return spring for pressing the valve body in the closing direction of the valve, wherein, when this magnet is energized, the movable element is attracted to the stationary core side by magnetism. The fuel injection valve is designed according to the side feed system, wherein the fuel flows so as to cross the passage inside the injection valve body through the inlet and outlet arranged on the side of the body of the fuel injection valve, and part of the fuel is fed into an injection hole by passing around the movable element when the valve opens.

The aforementioned movable element is composed of a valve rod integrally connected with a hollow anchor having a larger diameter than the valve rod, and a radius of 0.8 mm or more is formed on the boundary between the outer peripheries of the valve rod and anchor.

In the aforementioned embodiment, nitriding lamellas are formed on the surfaces of one or both of the impact portions between the valve body 5 and valve seat 4c (nozzle body 4), between the valve body 5 and its valve guide 17, and between the stopper 16 and movable element 6; and the sliding section between the movable element 6 and stationary core 3. It is also possible to make such arrangements that hard coating is provided on the surfaces of the aforementioned nitriding lamellas. This hard coating includes CrN coating, for example. This coating is provided by activated reaction evaporation (ARE) according to physical vapor deposition (PDV) method characterized by excellent adhesion with the base material, subsequent to plasma nitriding.

In this manner, the surface reformed layer of the parts subjected to wear and impact is formed of the nitriding lamella and chromium nickel coating by low temperature nitriding process. This arrangement further improves the durability of the CNG-compatible fuel injection valve (resistance to impact, wear and shock). A film of about 2 µm was formed in the formation process using a nitrogen gas as a reaction gas, and chromium Cr as a evaporation substance under a gas pressure of up to 0.13 Pa, with an electron beam power of 5 kW and 140 mA, at a substrate applied voltage of d.c. - 400V and a substrate temperature of up to 400°C, wherein coating process continued for one hour.

It is also possible to make such arrangements that the hard coating formed on the surface of the nitriding lamella is Ni-P plating.

In the aforementioned embodiment, the fuel injection valve has been descried as a CNG-compatible fuel injection valve. The above description can also be applied to a gasoline engine-compatible fuel injection valve.

### INDUSTRIAL FIELD OF APPLICATION

The present invention described above improves the shock, wear and impact resistance of the component parts of a fuel injection valve for internal combustion engine using such a gasified fuel as CNG, and provides a fuel injection valve characterized by long-term service life.

## Claims

1. An electromagnetic fuel injection valve comprising a stationary core (3) constituting a part of a magnetic circuit, a valve seat and a movable element (6) with a valve body (5),
the inner circumferential surface of said stationary core (3) is provided with a guide sleeve (14) for guiding the sliding motion of said movable element (6) with said valve body (5), wherein said guide sleeve (14) is made of a nonmagnetic member
**characterized in that**
- the nonmagnetic member has a high hardness,
- the surface of said guide sleeve (14) is provided with a wear-proof coating, and
- a guide (15), whose sliding movement is guided by said guide sleeve (14), is fixed on one end of said movable element (6), and said guide (15) is also composed of a nonmagnetic member of high hardness, and the surface of said guide (15) is provided with a wear-proof coating.

2. Fuel injection valve according to claim 1, **characterized in that** said wear-proof coating is constituted by a nitriding coating.

3. Fuel injection valve according to any of the preceding claims, **characterized in that** said nitriding coating is formed by a low-temperature nitriding coating having been nitrided at a temperature of 350 through 480°C.

4. Fuel injection valve according to any of the preceding claims, **characterized in that** said nitriding coating has the depth of at least 30 µm and the hardness is at least Hv 800 even at the depth of 30 µm.

5. Fuel injection valve according to any of the preceding claims, **characterized in that** a nitriding coating is formed on at least one of a nozzle body (4) equipped with said valve seat (4c), said valve guide (17), said valve body (5), said movable element (6) integral with said valve body (5), and said stopper (16) for determining the stroke of said valve body (5).

6. Fuel injection valve according to any of the preceding claims, **characterized in that** a hard coating is formed on the surface of said nitriding coating.

## Patentansprüche

1. Elektromagnetisches Kraftstoffeinspritzventil mit einem stationären Kern (3), der einen Teil eines Magnetkreises bildet, einem Ventilsitz und einem beweglichen Element (6) mit einem Ventilkörper (5),
wobei die Innenumfangsfläche des stationären Kerns (3) mit einer Führungsbuchse (14) zum Führen der Gleitbewegung des beweglichen Elements (6) mit dem Ventilkörper (5) versehen ist,
wobei die Führungsbuchse (14) aus einem nichtmagnetischen Element hergestellt ist,
**dadurch gekennzeichnet, dass**
- das nichtmagnetische Element eine hohe Härte besitzt,
- die Oberfläche der Führungsbuchse (14) mit einer abriebfesten Beschichtung versehen ist, und
- eine Führung (15), deren Gleitbewegung durch die Führungsbuchse (14) geführt wird, an einem Ende des beweglichen Elements (6) befestigt ist und die Führung (15) auch aus einem nichtmagnetischen Element von hoher Härte besteht und die Oberfläche der Führung (15) mit einer verschleissbeständigen Beschichtung versehen ist.

2. Kraftstoffeinspritzventil nach Anspruch 1, **dadurch gekennzeichnet, dass** die verschleissbeständige Beschichtung aus einer Nitrierbeschichtung besteht.

3. Kraftstoffeinspritzventil nach irgendeinem der vorhergehenden Ansprüche, **dadurch gekennzeichnet, dass** die Nitrierbeschichtung durch eine Niedrigtemperatur-Nitrierbeschichtung gebildet wird, die bei einer Temperatur von 350 bis 480°C nitriert worden ist.

4. Kraftstoffeinspritzventil nach irgendeinem der vorhergehenden Ansprüche, **dadurch gekennzeichnet, dass** die Nitrierbeschichtung eine Tiefe von mindestens 30 µm hat und die Härte selbst in der Tiefe von 30 µm mindestens Hv 800 beträgt.

5. Kraftstoffeinspritzventil nach irgendeinem der vorhergehenden Ansprüche, **dadurch gekennzeichnet, dass** eine Nitrierbeschichtung auf mindestens einem von einem mit dem Ventilsitz (4c) ausgestatteten Düsenkörper (4), der Ventilführung (17), dem Ventilkörper (5), dem mit dem Ventilkörper (5) einstückigen beweglichen Element (6) und dem Anschlag (16) zum Bestimmen des Hubs des Ventilkörpers (5) ausgebildet ist.

6. Kraftstoffeinspritzventil nach irgendeinem der vorhergehenden Ansprüche, **dadurch gekennzeichnet, dass** eine harte Beschichtung auf der Oberfläche der Nitrierbeschichtung ausgebildet ist.

## Revendications

1. Soupape d'injection de carburant électromagnétique comprenant un noyau stationnaire (3) constituant une partie d'un circuit magnétique, un siège de soupape et un élément mobile (6) ayant un corps de soupape (5),
la surface circonférentielle interne dudit noyau stationnaire (3) est munie d'un manchon de guidage (14) pour guider le mouvement de glissement dudit élément mobile (6) avec ledit corps de soupape (5), où ledit manchon de guidage (14) est fabriqué en un élément non magnétique,
**caractérisée en ce que**
- l'élément non magnétique possède une haute dureté,
- la surface dudit manchon de guidage (14) est muni d'un revêtement résistant à l'usure, et
- un guide (15) dont le mouvement de glissement est guidé par ledit manchon de guidage (14), est fixé sur une extrémité dudit élément mobile (6), et ledit guide (15) est aussi constitué d'un élément non magnétique de haute dureté, et la surface dudit guide (15) est munie d'un revêtement résistant à l'usure.

2. Soupape d'injection de carburant selon la revendication 1, **caractérisée en ce que** ledit revêtement résistant à l'usure est constitué par un revêtement de nitruration.

3. Soupape d'injection de carburant selon l'une quelconque des revendications précédentes, **caractérisée en ce que** ledit revêtement de nitruration est formé par un revêtement de nitruration à basse température ayant été nitruré à une température comprise entre 350 et 480°C.

4. Soupape d'injection de carburant selon l'une quelconque des revendications précédentes, **caractérisée en ce que** ledit revêtement de nitruration a une profondeur d'au moins 30 µm et une dureté d'au moins Hv 800 même à une profondeur de 30 µm.

5. Soupape d'injection de carburant selon l'une quelconque des revendications précédentes, **caractérisée en ce qu'**un revêtement de nitruration est formé sur au moins un des corps de buse (4) équipé dudit siège de soupape (4c), dudit guide de soupape (17), dudit corps de soupape (5), dudit élément mobile (6) intégré au dit corps de soupape (5) et de ladite butée (16) pour déterminer la course dudit corps de soupape (5).

6. Soupape d'injection de carburant selon l'une quelconque des revendications précédentes, **caractérisée en ce qu'**un revêtement dur est formé sur la surface dudit revêtement de nitruration.
